# EUROPEAN PATENT SPECIFICATION

(11) **EP 2 658 324 B1**
(45) Date of publication and mention of the grant of the patent: **01.03.2017**
(21) Application number: 12360031.4
(22) Date of filing: 26.04.2012
(51) Int. Cl.: H04W 52/32, H04W 52/34, H04W 52/40, H04W 52/28, H04W 16/08, H04W 52/14, H04W 52/22, H04W 52/36, H04W 52/24, H04W 84/04

(54) **Pilot transmission power adjustment in a multi-flow HSDPA network**
Anpassung der Pilotsendeleistung in einem HSDPA-Mehrflussnetzwerk
Ajustement de puissance de transmission de pilote dans un Réseaux HSDPA à flux multiples

(43) Date of publication of application: 30.10.2013
(73) Proprietor: ALCATEL LUCENT, 92100 Boulogne-Billancourt (FR)
(72) Inventor: Wong, Shin Horng, Chippenham Wiltshire SN15 3YB (GB); Puddle, Nicola, Swindon Wiltshire SN4 0ND (GB); Brend, Graham, Bathford Bath BA1 7UE (GB)
(74) Representative: Sarup, David Alexander

(56) References cited:
- EP-A2- 2 169 994
- WO-A1-2012/034035
- WO-A1-2012/044988
- US-B1- 7 162 203

## Description

### FIELD OF THE INVENTION

The present invention relates to a method of adapting pilot signal transmission power of a base station operable to provide radio coverage in a multi-flow wireless communications network, a base station and computer program product operable to perform that method.

### BACKGROUND

Wireless telecommunications networks are known. In a cellular system, radio coverage is provided by area. Those areas of radio coverage are known as cells. A base station is located in each cell to provide radio coverage. User equipment in each cell receives information and data from the base station and transmits information and data to the base station.

Information and data transmitted by the base station to the user equipment occurs on channels of radio carriers known as downlink carriers. Information and data transmitted by user equipment to the base station occurs on uplink data channels of radio carriers known as uplink carriers. User equipment and base stations may be operable to perform multi-flow downlink communications. According to such a multi-flow enabled network, user equipment is operable to receive independent streams of data from base stations. In multi-flow High Speed Downlink Packet Access (HSDPA) networks (also known as multi-point HSDPA networks) user equipment is operable to receive two or more independent HSDPA streams from different cells. It will be appreciated that in an intra base station scenario, user equipment may receive two or more independent HSDPA steams from a single base station in different cells. The cells involved in a multi-flow HSDPA scenario may thus belong to the same base station or to different base stations.

Multi-flow operation allows for all increase in data traffic throughput given a fixed amount of radio spectrum but may impact adversely upon other functionality provided in a network.

US 7,162,203 describes a method and system for reducing interference in a cellular radio communications network. One or more parameters affecting user terminals within a cell are adjusted such that the cell boundary is modified, thereby redistributing a cell load such that interference in the network is reduced.

WO 2012/034035 describes a method, apparatus and system which provides for dynamic selection of a secondary serving cell, whether the available secondary serving cells are in the same frequency as a primary serving cell, a different frequency in the same band as a primary serving cell, or in a different band to the primary serving cell. User equipment may be preconfigured for each available secondary serving cell, and may receive a configuration message to allow selection between secondary serving cells based on various operational factors.

Accordingly, it is proposed to address efficient operation of a network enabled with multi-flow operational capacity.

### SUMMARY

A first aspect provides a method of adapting pilot signal transmission power of a base station operable to provide radio coverage in a multi-flow high speed downlink packet access wireless communications network, the method comprising the steps of: monitoring a base station loading parameter comprising an indication of data traffic supported by said base station comprising an indication of multi-flow high speed packet downlink access downlink load supported by said base station; assessing whether the loading parameter has passed a threshold value; and, if so, adapting the pilot signal transmission power of the base station to adjust a region of multi-flow high speed downlink packet access capable radio coverage overlap between the area of radio coverage provided by the base station and a set of adjacent base stations.

A multi-flow enabled network allows appropriate user equipment to receive independent streams of data from two or more base stations. In multi-flow High Speed Downlink Packet Access networks (MP-HSDPA networks) also known as multi-point HSDPA networks, user equipment is operable to receive two or more independent HSDPA streams from different cells, provided it is in a geographical position in which radio coverage can be provided by more than one cell. Such cells may be provided on the same frequency and may be supported by different base stations. In general, cells involved in a multi-flow HSDPA scenario may belong to the same base station or to different base stations.

In a multi-flow HSDPA scenario, the cell that the user equipment is primarily attached to is referred to as the serving cell. Other cells which stream HSDPA packets to user equipment according to multi-flow techniques are known as assisting serving cells. It will be appreciated that in multi-flow or multi-point operation the streams of data sent to user equipment are completely independent. This is different to a soft or softer handover scenario in which streams can be used to reinforce each other and where a packet fails on one stream it may be received on the other. That is to say, a multi-flow scenario aids overall throughput by providing two separate streams of data to user equipment using, on occasion, the same frequency resource.

The first aspect recognises that Multi-point High Speed Downlink Packet Access operation is particularly useful for user equipment operating in an overlapping coverage area of two cells. It will be appreciated that that overlap area may occur at the edge of two cells supported by two different base stations. In overlapping coverage areas the user equipment can receive two or more streams of HSDPA traffic, one stream from each cell.

It will therefore be appreciated that MP-HSDPA provides a telecommunications network with the ability to support higher total throughput than can be realised via each cell individually and, thus, can offer an improvement to user equipment operation in regions where, typically, throughput and operation may be most compromised; that is to say, at a cell edge. The first aspect recognises that in a multi-flow network, adjusting a region of overlap may assist in optimising efficient operation of a network by increasing data throughput. An increase in overlap would typically (in a non-multi-flow enabled network) detrimentally effect operation of a network by causing increased interference and unnecessary increases in user equipment and base station transmit power.

The first aspect recognises that an increase in overlap may assist a base station experiencing a period of overload. Rather than decreasing its own coverage, and increasing the coverage of adjacent cells to encourage handover, a region of overlap may be altered to encourage multi-flow operation. Furthermore, a base station which is operating in such a manner that it is underutilised may offer its resources to adjacent base stations and overlap regions may be increased to encourage multi-flow operation.

Furthermore, the first aspect recognises that a base station may be operable to take unilateral action to try and ensure efficient operation of a multi-flow capable network.

Although aspects and embodiments described herein have utility across a macro cell network, it will be appreciated that many aspects and embodiments described have particular relevance to small cell, for example, femto cell, deployments. It will be appreciated that each small cell may have a throughput which can be limited when compared with a typical macro cell throughput. For example, backhaul used by femto cells and small cells is often throughput limited. Many aspects of multi-point HSDPA usage described in relation to a macro cell network can be particularly efficiently used in relation to a small cell network.

According to one embodiment, if the loading parameter is assessed to have passed a threshold value; the method further comprises: communicating an intention to adapt the pilot signal transmission power of the base station to adjust a region of multi-flow HSDPA capable radio coverage overlap to the set of adjacent base stations.

Accordingly, a base station may be operable to inform neighbouring base stations that it has resource, for example, downlink resource or backhaul, available for multi-flow operation, before increasing its pilot transmit power. Adjacent base stations are then made aware of a unilateral decision made by a neighbour and may adjust their own operation accordingly. Such informing make take place via base station to base station direct signalling, or may, for example, occur, in a small cell network particularly, via signalling to a small cell gateway, that small cell gateway being operable to relay information to further base stations determined to be adjacent, or neighbouring, to said base station. Furthermore, in some embodiments, a small cell gateway may be operable to store indications of available resource from small cell base stations, and indications of a request for assistance from other small cell base stations, and thus offer a response to those small cell base stations which have indicated they have available resource which are determined to neighbour small cell base stations which have requested assistance or reported overload, and a desire to benefit from multi-flow operation, if available.

According to one embodiment, the intention to adapt comprises an indication of available multi-flow HSDPA capable resource at the base station. Accordingly, by including an indication of a degree of available multi-flow resource, adjacent cells may make an assessment of whether they are likely to change their own operation by implementing multi-flow techniques. If the resource indicated as available is insufficient to support multi-flow techniques, an increase in coverage area by an adjacent base station may result simply in increased interference being experienced within a cell.

According to one embodiment, the method further comprises: awaiting a response from at least one of the set of adjacent base stations to the communicated intention to change before adapting the pilot signal transmission power of the base station to adjust a region of multi-flow HSDPA capable radio coverage overlap to the set of adjacent base stations. Accordingly, before taking steps to increase its coverage area, a base station may await a response from a neighbour, indicating that they could make use of any additional resource, or backhaul offered by the base station. By waiting for a response, a base station can mitigate against the chance that an increase in overlap would simply cause an increase in interference, rather than an increased uptake of multi-flow techniques.

According to one embodiment, the method further comprises: assessing that the loading parameter has passed a threshold indicative that the base station has unallocated resource for multi-flow HSDPA network operation, and the adapting comprises increasing the pilot transmission power of the base station to increase the region of multi-flow HSDPA capable radio coverage overlap between the area of radio coverage provided by the base station and a set of adjacent base stations. Accordingly, a base station which determines it has available resource which may be utilised for multi-flow operation with neighbouring base stations can be operable to increase its transmit power, thus increasing an overlap area so that those available resources can be used by user equipment operating in a cell supported by an adjacent base station. According to one embodiment, the method further comprises: assessing that the loading parameter has passed a threshold indicative that the base station has insufficient resource for multi-flow HSDPA operation, and the adapting comprises decreasing the pilot transmission power of the base station to a predetermined basic pilot transmission power to decrease the region of multi-flow HSDPA capable radio coverage overlap between the area of radio coverage provided by the base station and the set of adjacent base stations. Accordingly each base station operating within a network may have a preconfigured normal, ambient or "basic" coverage area, which ensures radio coverage is maintained across a geographical area. If a base station has increased its coverage area in order to assist neighbouring base stations with multi flow operation, and subsequently determines it is, itself, overloaded, it may be operable to reduce its coverage area back to its basic level. Furthermore, a base station which determines it is overloaded may be operable to indicate to neighbours that it could benefit from an increase in overlap region, if those neighbouring base stations have available and sufficient resource to provide an opportunity to offer user equipment an opportunity to make use of a multi-flow capability.

According to one embodiment, the set of adjacent base stations comprises a set of base stations directly neighbouring the base station. Accordingly, those adjacent base stations may comprise first degree neighbours to the base station, those first degree neighbours being best placed to offer an increase in overlap region for use in multi-flow operation.

According to one embodiment, the step of assessing whether the loading parameter has passed a threshold value comprises evaluating the monitored loading parameter and comparing the loading parameter with historical loading parameter data to determine whether an adjustment to the pilot transmit power at a monitored value has been beneficial. Accordingly, though a simple predetermined static threshold may be configured to act as a trigger for the present method, it will be appreciated that a base station may be operable to learn, based on network parameters, for example, timing of a detected incidence of a threshold being passed, whether implementation of techniques according to the method are likely to improve overall network throughput.

According to one embodiment, the step of adapting pilot transmit power of the base station comprises adapting the pilot transmit power of the base station by a predetermined increment. Accordingly, changes to operation of a network may be implemented gradually, thereby minimising potential disruption to operation and spreading any increase in network signalling required to implement and establish multi-flow operation.

According to one embodiment, a magnitude of the predetermined increment is selected based upon an extent to which the loading parameter has passed the threshold. Accordingly, if a loading parameter is significantly past a threshold, a base station may be in great need of assistance, or more able to offer available resource to neighbouring base station for use in multi-flow operation.

According to one embodiment, a magnitude of the predetermined increment is proportional to an indication of available multi-flow HSDPA capable resource at the base station. Accordingly, if significant resource is available at a lightly loaded base station, that base station may be able to offer more support to multi-flow operation and thus significant increase in overlap with adjacent cells, without detrimentally impacting its own operation and operation of its own user equipment.

According to one embodiment, the step of adapting the pilot transmit power of the base station comprises adjusting the pilot transmit power subject to coverage constraints which operate to ensure a basic pilot transmit power selected by the base station is such that, together with the set of adjacent base stations, radio coverage is provided across a predetermined geographic area. Accordingly, a coverage region offered by a base station may be associated with a correlating pilot transmit power. A minimum transmit power may be determined for each base station in a region and the transmit power at a base station may not be reduced such that it is less than such a basic transmit power level.

According to one embodiment, the base station comprises a small cell base station.

According to some embodiments, the steps may be performed continuously, and repeated such that the repetition of steps results in an iterative process for adapting a transmit power of a base station in a multi-flow network.

A second aspect provides a computer program product operable, when executed on a computer, to perform the method of the first aspect.

A third aspect provides a base station operable to adapt its pilot signal transmission power, the base station being operable to provide radio coverage in a multi-flow high speed downlink packet access wireless communications network, the base station comprising: monitoring logic operable to monitor a base station loading parameter comprising an indication of data traffic supported by said base station comprising an indication of multi-flow high speed downlink packet access downlink load supported by said base station; assessment logic operable to assess whether the loading parameter has passed a threshold value; and adaptation logic operable to adapt the pilot signal transmission power of the base station if the loading parameter has passed the threshold value, to adjust a region of multi-flow high speed downlink packet access capable radio coverage overlap between the area of radio coverage provided by the base station and a set of adjacent base stations.

According to one embodiment, the base station further comprises: communication logic operable to communicate an intention to adapt the pilot signal transmission power of the base station to adjust a region of multi-flow HSDPA capable radio coverage overlap to the set of adjacent base stations if the loading parameter is assessed by the assessment logic to have passed a threshold value;

According to one embodiment, the intention to adapt comprises an indication of available multi-flow HSDPA capable resource at the base station.

According to one embodiment, the adaptation logic is operable to await a response from at least one of the set of adjacent base stations to the communicated intention to change before adapting the pilot signal transmission power of the base station to adjust a region of multi-flow HSDPA capable radio coverage overlap to the set of adjacent base stations.

According to one embodiment, the assessment logic is operable to assess that the loading parameter has passed a threshold indicative that the base station has unallocated resource for multi-flow HSDPA network operation, and the adaptation logic is operable to increase the pilot transmission power of the base station to increase the region of multi-flow HSDPA capable radio coverage overlap between the area of radio coverage provided by the base station and a set of adjacent base stations.

According to one embodiment, the assessment logic is operable to assess that the loading parameter has passed a threshold indicative that the base station has insufficient resource for multi-flow HSDPA network operation, and the adaptation logic is
operable to decrease the pilot transmission power of the base station to a predetermined basic pilot transmission power to decrease the region of multi-flow HSDPA capable radio coverage overlap between the area of radio coverage provided by the base station and the set of adjacent base stations.

According to one embodiment, the set of adjacent base stations comprises a set of base stations directly neighbouring the base station.

According to one embodiment, the assessment logic is operable to assess whether the loading parameter has passed a threshold value comprises by evaluating the monitored loading parameter and comparing the loading parameter with historical loading parameter data to determine whether an adjustment to the pilot transmit power at a monitored value has been beneficial.

According to one embodiment, the adaptation logic is operable to adapting pilot transmit power of the base station by adapting the pilot transmit power of the base station by a predetermined increment.

According to one embodiment, a magnitude of the predetermined increment is selected based upon an extent to which the loading parameter has passed the threshold.

According to one embodiment, a magnitude of the predetermined increment is proportional to an indication of available multi-flow HSDPA capable resource at the base station.

According to one embodiment, the adaptation logic is operable to adapt the pilot transmit power of the base station by adjusting the pilot transmit power subject to coverage constraints which operate to ensure a basic pilot transmit power selected by the base station is such that, together with the set of adjacent base stations, radio coverage is provided across a predetermined geographic area.

According to one embodiment, the base station comprises a small cell base station.

According to one embodiment, the base station comprises repetition logic operable to instruct repetition of the monitoring, assessing and adjusting steps.

Further particular and preferred aspects are set out in the accompanying independent and dependent claims. Features of the dependent claims may be combined with the features of the independent claims as appropriate, and in combinations other than those explicitly set out in the claims.

### BRIEF DESCRIPTION OF THE DRAWINGS

Embodiments of the present invention will now be described further with reference to the accompanying drawings, in which:
Figure 1 illustrates the main components of a wireless telecommunications network according to one embodiment;
Figure 2 illustrates schematically user equipment and base stations operable to perform multi-flow downlink communications;
Figure 3 illustrates a general small cell deployment within one macro cell, as shown in Figure 1;
Figure 4 illustrates schematically a small cell network operating to provide user equipment with coverage; and
Figure 5 illustrates schematically a small cell network according to one embodiment.

### DESCRIPTION OF THE EMBODIMENTS

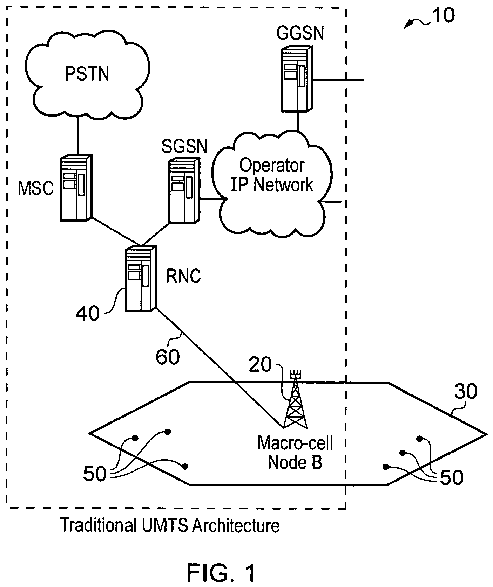

Figure 1 illustrates schematically the main components of a wireless telecommunications system 10 according to one embodiment. User equipment 50 roam through the wireless telecommunications system. Base stations 20 are provided which support areas of radio coverage 30. A number of such base stations are provided and distributed geographically in order to provide a wide area of radio coverage to user equipment 50. When user equipment is within an area served by a base station 30, communications may be established between the user equipment and the base station over associated radio links. Each base station typically supports a number of sectors within a geographical area of service 30.

Typically, a different antenna within a base station supports each associated sector. Each base station 20 typically has multiple antennas. It will be appreciated that Figure 1 illustrates a small sub-set of a total number of user equipment and base stations that may be present in a typical communications system 10. According to the network shown in Figure 1, the wireless communications system is managed by a Radio Network Controller (RNC) 40. The RNC 40 controls operation of the wireless telecommunications system by communicating with a plurality of base stations over a backhaul communications link 60. The RNC also communicates with user equipment via each base station and, thus, effectively manages a region of the entire wireless communications system.

User equipment communicates with a base station 20 by transmitting data and information on channels known as uplink or reverse channels, and base station 20 communicates with user equipment 50 by transmitting data and information on radio channels known as downlink or forward channels.

It will be appreciated that each base station may support one or more "cells" in each sector. A cell typically operates on one frequency. If a base station operates to provide two frequencies to user equipment in a geographical area, the geographical coverage of each of those frequencies is referred to as a cell. Each cell supported by a base station may also comprise sectors as referred to above.

It will be appreciated that Figure 1 illustrates a communications network 10 according to one Radio Access Technology (RAT). It will be appreciated that alternative Radio Access Technologies are also known and that aspects and embodiments described herein may be used in relation to those Radio Access Technologies. In particular, LTE or 4G operate in a similar manner to that described above. However, base stations or node Bs are typically replaced by E node Bs and RNCs and a core network functionality is typically provided in such an LTE network by mobility management entities and packet gateways and serving gateways.

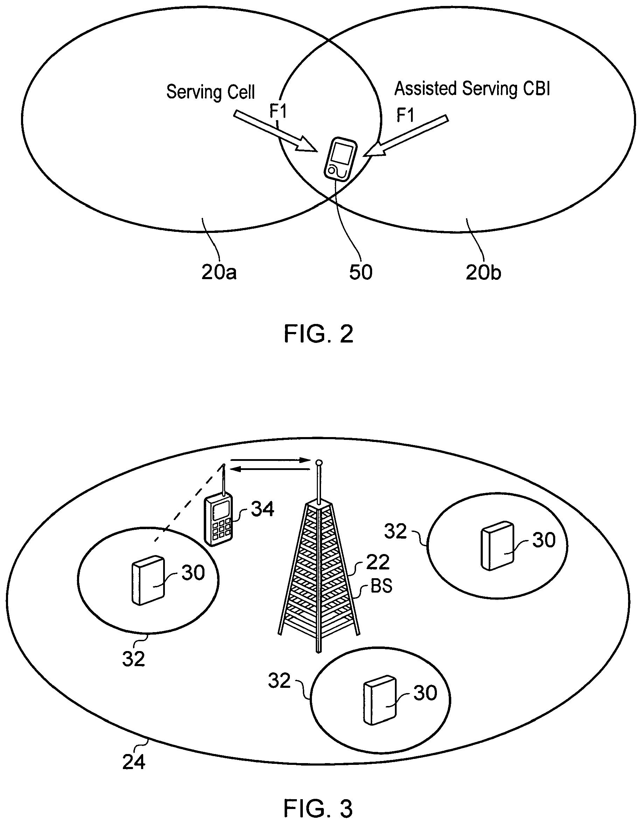

Figure 2 illustrates schematically user equipment and base stations operable to perform multi-flow downlink communications. According to such a multi-flow network, user equipment 50 is operable to receive independent streams of data from base stations 20a and 20b. In multi-flow High Speed Downlink Packet Access networks (HSDPA networks, also known as multi-point HSDPA networks) user equipment is operable to receive two or more independent HSDPA streams from different cells.

In a scenario illustrated schematically in Figure 2, those cells, both provided on frequency F1, are supported by different base stations 20a, 20b. It will be appreciated that in an intra base station scenario, user equipment 50 may receive two or more independent HSDPA streams from a single base station in different cells. The cells involved in a multi-flow HSDPA scenario may belong to the same base station or to different base stations.

In a multi-flow HSDPA scenario, the cell that the user equipment is primarily attached to is referred to as the serving cell. In the scenario illustrated schematically in Figure 2, base station 20a supports a serving cell. Other cells which stream HSDPA packets to user equipment are known as assisting serving cells. In Figure 2, base station 20b supports an assisting serving cell.

It will be appreciated that in multi-flow or multi-point operation the streams of data sent to user equipment are completely independent. This is different to a soft or softer handover scenario in which streams can be used to reinforce each other and where a packet fails on one stream it may be received on the other. That is to say, a multi-flow scenario aids overall throughput by providing two separate streams of data to user equipment using, on occasion, the same frequency resource.

Multi-Point (also known as Multi-Flow) High Speed Downlink Packet Access operation is particularly useful for user equipment operating in an overlapping coverage area of two cells. It will be appreciated that that overlap area may occur at the edge of two cells supported by two different base stations. In overlapping coverage areas the user equipment can receive two or more streams of HSDPA traffic, one stream from each cell.

It will therefore be appreciated that MP-HSDPA (Multi-Point High Speed Downlink Packet Access) operation provides a telecommunications network with the ability to support higher total throughput than can be realised via each cell individually and, thus, can offer an improvement to user equipment operation in regions where, typically, throughput and operation may be most compromised; that is to say, at a cell edge.

Although aspects and embodiments described herein have utility across a macro cell network, it will be appreciated that many aspects and embodiments described have particular relevance to femto cell deployments. It will be appreciated that each small cell (for example, femto cell) may have a throughput which can be limited when compared with a typical macro cell throughput. For example, backhaul used by femto cells and small cells is often throughput limited. Many aspects of multi-point HSDPA usage described in relation to a macro cell network can be re-used within a femto cell network.

Figure 3 illustrates schematically a typical small cell deployment. As shown in more detail in Figure 3, there are provided a number of small cell (in this case, femto cell) base stations 30 (sometimes referred to as home base stations), each of which provides a femto cell 32 (or home cell) in the vicinity of a building within which the associated femto cell base station is installed. Femto cells 32 provide local communications coverage for users in the vicinity of such buildings. Each femto cell base station 30 communicates with the network 10 via a femto cell controller/gateway. A handover or camping event is initiated between a typical base station and femto base stations 30 when user equipment 50 provide a measurement report to a macro cell base station 20 which indicates that a femto base station 30 is within range. Femto cell base stations 30 typically utilise a user's backhaul internet connection in order to provide backhaul.

Small cell base stations, for example, femto cells, are low powered, low cost, user deployed base stations that provide high cellular quality of service in residential or enterprise environments. In contrast to macro cell approaches where complex and highly reliable base stations are deployed in strategic locations decided by a network owner, small cell base stations are typically provided locally by customers. Those small cells provide local coverage in areas of the macro network where quality of service may be low. Thus, small cell base stations provide for improved quality of service in areas which are difficult for network operators. To reduce the cost of small cell stations and to reduce complexity and interference of the small cells on user equipment within a macro cell, a transmission power of a small cell base station is relatively low in order to restrict the size of the cells to a range of tens of metres or less. Small cell base stations have extensive auto configuration and self-optimization capability to enable a simple plug-and-play deployment. As such, they are typically designed to automatically integrate themselves into an existing macro cellular wireless network 10.

Before describing embodiments in any detail, a brief overview will now be provided. Aspects aim to optimize gains that can be achieved by utilising multi-flow or multi-point HSDPA in a telecommunications network. In particular, aspects may seek to maximise benefits of MP-HSDPA in small cell deployments. However, it will be appreciated that the techniques described in relation to small cells may also be applied at a macro cell level.

Aspects allow base stations supporting cells to adjust their coverage area depending upon loading being experienced within that cell. Furthermore, a base station supporting a cell may be operable to adjust its cell coverage area depending upon its own loading and the loading being experienced by its neighbours. Aspects recognise that gains available by using multi-point HSDPA techniques depend upon cell loading and cell overlap. A cell participating in MP-HSDPA is required to serve both user equipment operating within its own cell which it serves, and also to serve user equipment in neighbouring cells. As a result, if a cell is experiencing a period of high loading, resources used to serve neighbour cell user equipment may not be used to serve its own user equipment. It will also be appreciated that neighbouring cell user equipment are typically at a cell's edge and resources allocated to serving those user equipment primarily attached to a neighbouring cell are not used particularly efficiently since user equipment at a cell edge are likely to be in regions of poor RF condition. Equivalently, a cell experiencing low load will typically have under-utilised resources which may be available and free to serve neighbouring cells' user equipment, thus a cell which is experiencing low loading may be used to increase overall network throughput. Only user equipment located in overlapping coverage areas is able to benefit from MP-HSDPA, since only those user equipment are able to receive traffic from both a serving and an alternative (for example, neighbouring) cell.

It will be appreciated that in a macro network, coverage is extensively planned and based on extensive measurements to ensure key geographical areas within the network are covered. By way of contrast, coverage in a femto network is usually adhoc and provided in a plug-and-play manner, and a user can move femto cells from one location to another at will. Aspects described herein provide solutions to both a macro network and a femto cell network. Aspects realise that the coverage planning stage of macro network implementation can be such that it allows for dynamic changes in macro cell coverage areas during operation to enable full implementation of multi-point flow operation.

According to one embodiment, a cell (for example, a femto cell) may be operable to increase its coverage area when it determines that its cell load is low and it has backhaul available. As a result of increasing its coverage area, a lightly loaded cell increases its overlap with neighbouring cells. As a result, that lightly loaded cell captures more user equipment in order to provide them with MP-HSDPA functionality.

According to some embodiments, if a cell (for example, a femto cell or other similar small cell) determines that its load is high, it may be operable to reduce its coverage area since it does not benefit from offering its resources to the support of MP-HSDPA functionality within the network.

According to some embodiments, a cell is operable to indicate to neighbouring cells that it is able to support additional multi-point or multi-flow HSDPA user equipment links and may only increase its coverage area if at least one neighbouring cell responds indicating that it wishes to use available MP-HSDPA resource. Such an arrangement recognises that an increase in overlap in coverage areas may result in increased interference experienced within cells if that overlap is not being used for multi-flow operation or soft handover. It will thus be appreciated that embodiments which require a response before a cell increases its coverage unnecessarily may result in more efficient overall network operation rather than an increase in interference. It will be appreciated that cells may indicate and message each other via an RNC or, in a small cell (for example, femto cell) deployment, signalling can be via luh or lurh signalling to selected neighbour cells via, for example, a femto cell gateway. It will be appreciated that in a small cell deployment a group of appropriate selected neighbour cells can be determined via sniffing or other automatic neighbour relation procedures.

In some embodiments, a highly loaded cell desirous of additional MP-HSDPA support may signal such a need to selected neighbouring or adjacent cells. Any neighbouring cell which is able to support additional multi-point or multi-flow user equipment (for example, a cell which determines that it is experiencing low load and that backhaul is available) may respond to such a request from a highly loaded cell and increase its coverage area to capture some user equipment in order to perform multi-flow HSDPA.

According to some embodiments, loading thresholds may be used by cells or an appropriate control node to indicate whether a small cell or macro cell's coverage area may be increased or revert to an original predetermined size. Loading thresholds may be based on various operational characteristics of a cell, including, for example, cell load or backhaul load, or a relationship between those or similar characteristics. Such thresholds may be predetermined (for example, based on measurements and analysis) or may be dynamically learnt by a cell; for example, a femto cell or other similar small cell. Such learning may occur, for example, by utilising feedback in relation to the number of occasions on which a cell's coverage area was increased and resulted in capturing user equipment for multi-point operation. Furthermore, the thresholds may be learnt in relation to how often a cell needs to reduce its coverage area back to a nominal original size, based on the number of occasions that such a cell experiences overloading within its cell.

According to some embodiments, changes in coverage area of a cell, for example by increasing or decreasing transmission power, may be such that the change occurs in a gradual manner. The coverage may increase by predetermined increments or predetermined decreases and those predetermined increases or decreases may, according to some embodiments, be proportional to loading being experienced within a cell. In particular, it will be appreciated that as load reduces, the coverage offered by a cell according to some embodiments may increase. Since loading may be bursty in nature, a long term average load may be used to avoid rapid increase or decrease or coverage provided by a base station.

In further embodiments, a cell may be operable to indicate that it has additional resource available to support multi-flow operation and it may also include an indication of the amount of available resource; that is to say, the additional load that it could handle. That additional information may allow neighbouring or adjacent cells to decide whether the additional resource available from a lightly loaded cell merits the establishment of additional radio links for a particular user equipment to gain from moving to multi-flow operation. For example, in a multi-flow network supporting multi-flow operation from a maximum of two cells, there may be two cells which can offer additional resource to a serving cell to allow multi-flow operation. By indicating the amount of resource that each cell can offer, a serving cell requiring additional resource can select the cell that best meets its requirement; that is to say, it can be operable to select the cell which has the most, or at least sufficient, resource to support multi-flow operation with selected user equipment.

According to some embodiments, any cell indicating a need for additional resource may include an indication of an ideal amount of resource required. Such an indication may allow a neighbouring cell or adjacent cell which may have resource to offer to consider whether it is worth expanding its coverage area to support a cell indicating a need for additional multi-flow resource.

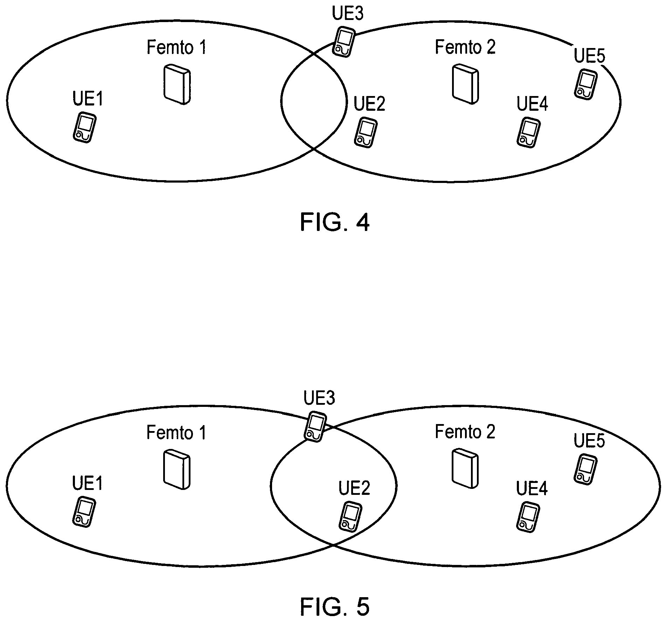

Figure 4 illustrates a typical small cell deployment within a network such as that shown schematically in Figure 1. The small cell network illustrated in Figure 4 comprises two neighbouring femto cells, namely femto 1 and femto 2. Femto 1 is lightly loaded and supports only one user equipment, UE1. Femto 2 is operable to serve four user equipment (UE2, UE3, UE4 and UE5). That femto may determine that it is heavily loaded; for example, it may be covering a meeting room where a meeting is in progress. Femto 1 loading may be determined to be below a predetermined threshold and, hence, it may indicate to its adjacent cells that it is able to support additional multi-flow user equipment operation. In such a scenario, femto 2 may receive such an offer and accept such an offer.

Figure 5 illustrates a small cell deployment according to one embodiment. As described above, femto 1's coverage area may be increased in response to femto 2's acceptance of its offer to provide multi-flow resource. As a result of increasing the coverage area of femto 1, it is able to offer resource to user equipment 2 and user equipment 3 which are served primarily by femto 2. User equipment 2 and user equipment 3 may be operable to detect femto 1's pilot signal and establish a radio link with that femto. Upon setting up multi-flow operation, femto 1 is operable to begin streaming an independent HS-DSCH packet flow to user equipment 2 and user equipment 3 and, thus, relieves part of femto 2's load.

Aspects allow a network to maximise support for multi-flow operational techniques, for example MP-HSDPA. Aspects allow spare resources to be effectively utilised within a network, thereby increasing overall system throughput. Such utilisation may be highly beneficial for any operator and may be particularly useful when considering the operation of small cell networks within a telecommunications network. Aspects are particularly useful in relation to small cells, since a small cell is typically likely to be supporting a lower throughput than an equivalent macro cell; for example, due to backhaul limitations that are associated with small cell deployments.

It will be appreciated that a person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its scope as defined by the claims. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of adapting pilot signal transmission power of a base station (20) operable to provide radio coverage in a multi-flow high speed downlink packet access wireless communications network,
said method comprising the steps of:
monitoring a base station (20) loading parameter comprising an indication of data traffic supported by said base station (20) comprising an indication of multi-flow high speed downlink packet access downlink load supported by said base station;
assessing whether said loading parameter has passed a threshold value;
and, if so, adapting said pilot signal transmission power of said base station (20) to adjust a region of multi-flow high speed downlink packet access capable radio coverage overlap between said area of radio coverage provided by said base station (20) and a set of adjacent base stations.

2. A method according to claim 1, wherein if said loading parameter is assessed to have passed a threshold value;
communicating an intention to adapt said pilot signal transmission power of said base station (20) to adjust a region of multi-flow high speed downlink packet access capable radio coverage overlap to said set of adjacent base stations.

3. A method according to claim 2, wherein said intention to adapt comprises an indication of available multi-flow high speed downlink packet access capable resource at said base station (20).

4. A method according to claim 2 or claim 3, comprising awaiting a response from at least one of said adjacent base stations to said communicated intention to adapt before adapting said pilot signal transmission power of said base station (20) to adjust a region of multi-flow high speed downlink packet access capable radio coverage overlap to said set of adjacent base stations.

5. A method according to any preceding claim, comprising assessing that said loading parameter has passed a threshold indicative that said base station (20) has unallocated resource for multi-flow high speed downlink packet access network operation, and said adapting comprises increasing said pilot transmission power of said base station (20) to increase said region of multi-flow high speed downlink packet access capable radio coverage overlap between said area of radio coverage provided by said base station (20) and a set of adjacent base stations.

6. A method according to any preceding claim, wherein said method comprises:
assessing that said loading parameter has passed a threshold indicative that said base station (20) has insufficient resource for multi-flow high speed downlink packet access network operation, and said adapting comprises decreasing said pilot transmission power of said base station (20) to a predetermined basic pilot transmission power to decrease said region of multi-flow high speed downlink packet access capable radio coverage overlap between said area of radio coverage provided by said base station (20) and a set of adjacent base stations.

7. A method according to any preceding claim, wherein said set of adjacent base stations comprises a set of base stations directly neighbouring said base station (20).

8. A method according to any preceding claim, wherein said step of assessing whether said loading parameter has passed a threshold value comprises evaluating said monitored loading parameter and comparing said loading parameter with historical loading parameter data to determine whether an adjustment to said pilot transmit power at a monitored value has been beneficial.

9. A method according to any preceding claim, wherein said step of changing pilot transmit power of said base station (20) comprises changing said pilot transmit power of said base station (20) by a predetermined increment.

10. A method according to claim 9, wherein a magnitude of said predetermined increment is selected based upon an extent to which said loading parameter has passed said threshold.

11. A method according to claim 9, wherein a magnitude of said predetermined increment is proportional to an indication of available multi-flow high speed downlink packet access capable resource at said base station.

12. A method according to any preceding claim, wherein said step of adapting pilot transmit power of said base station value comprises adjusting said pilot transmit power subject to coverage constraints which operate to ensure a basic pilot transmit power selected by said base station (20) is such that, together with said set of adjacent base stations, radio coverage is provided across a predetermined geographic area.

13. A computer program product operable, when executed on a computer, to perform the method of any one of claims 1 to 12.

14. A base station (20) operable to of adapt its pilot signal transmission power, said base station (20) being operable to provide radio coverage in a multi-flow high speed downlink packet access wireless communications network,
said base station (20) comprising:
monitoring logic operable to monitor a base station loading parameter comprising an indication of data traffic supported by said base station (20) comprising an indication of multi-flow high speed downlink packet access downlink load supported by said base station;
assessment logic operable to assess whether said loading parameter has passed a threshold value;
adaptation logic operable to adapt said pilot signal transmission power of said base station (20) if said loading parameter has passed said threshold value, to adjust a region of multi-flow high speed downlink packet access capable radio coverage overlap between said area of radio coverage provided by said base station (20) and a set of adjacent base stations.

## Patentansprüche

1. Verfahren zum Anpassen der Pilotsignalsendeleistung einer Basisstation (20), die dafür ausgelegt ist, um in einem drahtlosen HSDPA-Mehrflussnetzwerk (High Speed Downlink Packet Access) Funkabdeckung zur Verfügung zu stellen,
wobei das besagte Verfahren die folgenden Schritte umfasst:
das Überwachen der Ladeparameter einer Basisstation (20), welche eine Indikation des von besagter Basisstation (20) unterstützten Datenverkehrs umfassen, wobei die Indikation eine Indikation der Mehrfluss-HSDPA-Downlinklast umfasst, die von besagter Basisstation getragen wird;
das Evaluieren, ob besagter Ladeparameter einen Grenzwert überschritten hat;
und wenn dem so ist, das Anpassen der besagten Pilotsignalsendeleistung besagter Basisstation (20) zum Korrigieren einer Überlappung eines Gebiets mit HSDPA-fähiger Mehrfluss-Funkabdeckung zwischen besagtem, von besagter Basisstation (20) zur Verfügung gestelltem Funkabdeckungsbereich und einem Satz angrenzender Basisstationen.

2. Verfahren nach Anspruch 1, wobei dann, wenn für besagten Ladeparameter evaluiert wurde, dass er einen Grenzwert überschritten hat, Folgendes erfolgt:
das Kommunizieren einer Absicht zum Anpassen der besagten Pilotsignalsendeleistung besagter Basisstation (20) zum Korrigieren einer Überlappung eines Gebiets mit HSDPA-fähiger Mehrfluss-Funkabdeckung an besagten Satz angrenzender Basisstationen.

3. Verfahren nach Anspruch 2, wobei besagte Absicht zum Anpassen eine Angabe zu den an besagter Basisstation (20) verfügbaren Ressourcen umfasst, die für Mehrfluss-HSDPA ausgelegt sind.

4. Verfahren nach Anspruch 2 oder 3, weiterhin das Abwarten einer Antwort von mindestens einer der besagten, angrenzenden Basisstationen auf besagte, kommunizierte Absicht zum Anpassen umfassend, ehe das Anpassen besagter Pilotsignalsendeleistung besagter Basisstation (20) zum Korrigieren eines Überlappungsbereichs HSDPA-fähiger Mehrfluss-Funkabdeckung mit besagtem Satz angrenzender Basisstationen erfolgt.

5. Verfahren nach einem jeglichen der vorgenannten Ansprüche, das Evaluieren umfassend, dass besagter Ladeparameter einen Grenzwert überschritten hat, der indikativ dafür ist, dass besagte Basisstation (20) nichtzugewiesene Ressourcen für einen Mehrfluss-HSDPA-Netzwerkbetrieb hat, und dass besagtes Anpassen umfasst, besagte Pilotsendeleistung besagter Basisstation (20) zu erhöhen, um besagten Überlappungsbereich HSDPA-fähiger Mehrfluss-Funkabdeckung zwischen besagtem, von besagter Basisstation (20) bereitgestelltem Funkabdeckungsbereich und besagtem Satz angrenzender Basisstationen zu erhöhen.

6. Verfahren nach einem beliebigen der vorstehenden Ansprüche, wobei besagtes Verfahren umfasst:
das Evaluieren, dass besagter Ladeparameter einen Grenzwert überschritten hat, der indikativ dafür ist, dass besagte Basisstation (20) unzureichende Ressourcen für einen Mehrfluss-HSDPA-Netzwerkbetrieb hat, und wobei das besagte Anpassen umfasst, besagte Pilotsendeleistung besagter Basisstation (20) auf eine voreingestellte Grundpilotsendeleistung zu senken, um besagten Überlappungsbereich HSDPA-fähiger Mehrfluss-Funkabdeckung zwischen besagtem, von besagter Basisstation (20) bereitgestelltem Funkabdeckungsbereich und besagtem Satz angrenzender Basisstationen zu senken.

7. Verfahren nach einem jeglichen der vorgenannten Ansprüche, wobei besagter Satz angrenzender Basisstationen einen Satz von Baisstationen umfasst, der besagter Basisstation (20) direkt benachbart ist.

8. Verfahren nach einem jeglichen der vorgenannten Ansprüche, wobei besagter Schritt des Evaluierens, ob besagter Ladeparameter einen Grenzwert überschritten hat, das Evaluieren besagter überwachter Ladeparameter und das Vergleichen besagter Ladeparameter mit historischen Ladeparameterdaten umfasst, um zu bestimmen, ob eine Anpassung an besagte Pilotsendeleistung mit einem überwachten Wert vorteilhaft war.

9. Verfahren nach einem jeglichen der vorgenannten Ansprüche, wobei besagter Schritt des Änderns der Pilotsendeleistung besagter Basisstation (20) umfasst, besagte Pilotsendeleistung besagter Basisstation (20) um einen vorbestimmten Wert zu erhöhen.

10. Verfahren nach Anspruch 9, wobei eine Größe besagter vordefinierter Erhöhung auf der Grundlage eines Ausmaßes ausgewählt wird, in welchem besagter Ladeparameter besagten Grenzwert überschritten hat.

11. Verfahren: nach Anspruch 9, wobei eine Größe besagter vordefinierter Erhöhung proportional ist zu einer Angabe zu den an besagter Basisstation verfügbaren Ressourcen, die für Mehrfluss-HSDPA ausgelegt sind.

12. Verfahren nach einem jeglichen der vorgenannten Ansprüche, wobei besagter Schritt des Anpässens des Werts der Pilotsendeleistung besagter Basisstation umfasst, besagte Pilotsendeleistung in Abhängigkeit von Abdeckungsbeschränkungen anzupassen, welche dazu dienen, zu gewährleisten, dass eine durch besagte Basisstation (20) ausgewählte Grund-Pilotsendeleistung dergestalt ausgewählt wird, dass die Funkabdeckung gemeinsam mit besagtem Satz angrenzender Basisstationen über einen vordefinierten geografischen Bereich hinweg zur Verfügung gestellt wird.

13. Computerprogramm-Produkt, betreibbar für das Durchführen des Verfahrens eines beliebigen der Ansprüche 1 bis 12, wenn es auf einem Computer ausgeführt wird.

14. Basisstation (20), ausgelegt für das Anpassen der Pilotsignalsendeleistung:
besagter Basisstation (20), um in einem drahtlosen HSDPA-Mehrflussnetzwerk (High Speed Downlink Packet Access) Funkabdeckung zur Verfügung zu stellen,
wobei besagte Basisstation (20) umfasst:
eine Überwachungslogik, die ausgelegt ist für das Überwachen der Ladeparameter einer Basisstation, welche eine Indikation des von besagter Basisstation (20) unterstützten Datenverkehrs umfassen, wobei die Indikation eine Indikation der Mehrfluss-HSDPA-Downlinklast umfasst, die von besagter Basisstation getragen wird;
eine Evaluierungslogik für das Evaluieren, ob besagter Ladeparameter einen Grenzwert überschritten hat;
eine Anpassungslogik, die dafür ausgelegt ist um dann, wenn besagter Ladeparameter besagten Grenzwert überschritten hat, besagte Pilotsignalsendeleistung besagter Basisstation (20) anzupassen, um eine Überlappung eines Gebiets mit HSDPA-fähiger Mehrfluss-Funkabdeckung zwischen besagtem, von besagter Basisstation (20) zur Verfügung gestelltem Funkabdeckungsbereich und einem Satz angrenzender Basisstationen zu korrigieren.

## Revendications

1. Procédé d'adaptation de puissance de transmission de signal pilote d'une station de base (20) exploitable pour fournir une couverture radio dans un réseau de communications sans fil à accès par paquets en liaison descendante à haute vitesse multi-flux,
ledit procédé comprenant les étapes suivantes :
surveiller un paramètre de charge de station de base (20) comprenant une indication de trafic de données supporté par ladite station de base (20) comprenant une indication de charge de liaison descendante d'accès par paquets en liaison descendante à haute vitesse multi-flux supportée par ladite station de base ;
estimer si ledit paramètre de charge a dépassé une valeur de seuil ;
et, si oui, adapter ladite puissance de transmission de signal pilote de ladite station de base (20) pour ajuster une région de chevauchement de couverture radio capable d'accès par paquets en liaison descendante à haute vitesse multi-flux entre ladite zone de couverture radio fournie par ladite station de base (20) et un ensemble de stations de base adjacentes.

2. Procédé selon la revendication 1, dans lequel si ledit paramètre de charge est estimé comme ayant dépassé une valeur de seuil ;
communiquer une intention d'adapter ladite puissance de transmission de signal pilote de ladite station de base (20) pour ajuster une région de chevauchement de couverture radio capable d'accès par paquets en liaison descendante à haute vitesse multi-flux audit ensemble de stations de base adjacentes.

3. Procédé selon la revendication 2, dans lequel ladite intention d'adapter comprend une indication de ressource capable d'accès par paquets en liaison descendante à haute vitesse multi-flux disponible au niveau de ladite station de base (20).

4. Procédé selon la revendication 2 ou la revendication 3, comprenant l'attente d'une réponse en provenance d'au moins une desdites stations de base adjacentes à ladite intention d'adapter communiquée avant d'adapter ladite puissance de transmission de signal pilote de ladite station de base (20) pour ajuster une région de chevauchement de couverture radio capable d'accès par paquets en liaison descendante à haute vitesse multi-flux audit ensemble de stations de base adjacentes.

5. Procédé selon l'une quelconque des revendications précédentes, comprenant l'estimation que ledit paramètre de charge a dépassé un seuil indiquant que ladite station de base (20) possède une ressource non allouée pour le fonctionnement de réseau à accès par paquets en liaison descendante à haute vitesse multi-flux, et ladite adaptation comprend l'augmentation de ladite puissance de transmission pilote de ladite station de base (20) pour augmenter ladite région de chevauchement de couverture radio capable d'accès par paquets en liaison descendante à haute vitesse multi-flux entre ladite zone de couverture radio fournie par ladite station de base (20) et un ensemble de stations de base adjacentes.

6. Procédé selon l'une quelconque des revendications précédentes, dans lequel ledit procédé comprend : l'estimation que ledit paramètre de charge a dépassé un seuil indiquant que ladite station de base (20) a une ressource insuffisante pour le fonctionnement de réseau à accès par paquets en liaison descendante à haute vitesse multi-flux, et ladite adaptation comprend la diminution de ladite puissance de transmission pilote de ladite station de base (20) à une puissance de transmission pilote de base prédéterminée pour diminuer ladite région de chevauchement de couverture radio capable d'accès par paquets en liaison descendante à haute vitesse multi-flux entre ladite zone de couverture radio fournie par ladite station de base (20) et un ensemble de stations de base adjacentes.

7. Procédé selon l'une quelconque des revendications précédentes, dans lequel ledit ensemble de stations de base adjacentes comprend un ensemble de stations de base qui sont directement voisines de ladite station de base (20).

8. Procédé selon l'une quelconque des revendications précédentes, dans lequel ladite étape d'estimation de si ledit paramètre de charge a dépassé une valeur de seuil comprend l'évaluation dudit paramètre de charge surveillé et la comparaison dudit paramètre de charge avec des données de paramètre de charge historiques pour déterminer si un ajustement de ladite puissance de transmission pilote à une valeur surveillée a été bénéfique.

9. Procédé selon l'une quelconque des revendications précédentes, dans lequel ladite étape de changement de puissance de transmission pilote de ladite station de base (20) comprend le changement de ladite puissance de transmission pilote de ladite station de base (20) d'un incrément prédéterminé.

10. Procédé selon la revendication 9, dans lequel une grandeur dudit incrément prédéterminé est sélectionnée sur la base d'une étendue jusqu'à laquelle ledit paramètre de charge a dépassé ledit seuil.

11. Procédé selon la revendication 9, dans lequel une grandeur dudit incrément prédéterminé est proportionnelle à une indication de ressource capable d'accès par paquets en liaison descendante à haute vitesse multi-flux disponible au niveau de ladite station de base.

12. Procédé selon l'une quelconque des revendications précédentes, dans lequel ladite étape d'adaptation de puissance de transmission pilote de ladite valeur de station de base comprend l'ajustement de ladite puissance de transmission pilote soumise à des contraintes de couverture qui opèrent pour garantir qu'une puissance de transmission pilote de base sélectionnée par ladite station de base (20) soit telle que, conjointement avec ledit ensemble de stations de base adjacentes, une couverture radio soit fournie à travers une zone géographique prédéterminée.

13. Produit de programme informatique exploitable, lorsqu'il est exécuté sur un ordinateur, pour effectuer le procédé de l'une quelconque des revendications 1 à 12.

14. Station de base (20) exploitable pour adapter sa puissance de transmission de signal pilote, ladite station de base (20) étant exploitable pour fournir une couverture radio dans un réseau de communications sans fil à accès par paquets en liaison descendante à haute vitesse multi-flux,
ladite station de base (20) comprenant :
une logique de surveillance exploitable pour surveiller un paramètre de charge de station de base comprenant une indication de trafic de données supporté par ladite station de base (20) comprenant une indication de charge de liaison descendante d'accès par paquets en liaison descendante à haute vitesse multi-flux supportée par ladite station de base ;
une logique d'estimation exploitable pour estimer si ledit paramètre de charge a dépassé une valeur de seuil ;
une logique d'adaptation exploitable pour adapter ladite puissance de transmission de signal pilote de ladite station de base (20) si ledit paramètre de charge a dépassé ladite valeur de seuil, pour ajuster une région de chevauchement de couverture radio capable d'accès par paquets en liaison descendante à haute vitesse multi-flux entre ladite zone de couverture radio fournie par ladite station de base (20) et un ensemble de stations de base adjacentes.
